# EUROPÄISCHE PATENTSCHRIFT

(11) **EP 0 894 296 B1**
(45) Veröffentlichungstag und Bekanntmachung des Hinweises auf die Patenterteilung: **19.07.2000**
(21) Anmeldenummer: 97916456.3
(22) Anmeldetag: 09.04.1997
(51) Int. Cl.: G05B 19/05

(54) **VERFAHREN ZUM ERFASSEN UND DOKUMENTIEREN NICHT ERFÜLLTER FORTSCHALTBEDINGUNGEN BEI SYSTEMEN, DIE VON SCHRITTORIENTIERTEN SPS-PROGRAMMEN GESTEUERT WERDEN**
PROCESS FOR DETECTING AND DOCUMENTING UNFULFILLED STEP-ENABLING CONDITIONS IN SYSTEMS CONTROLLED BY STEP-BY-STEP SPC PROGRAMS
PROCEDE POUR DETECTER ET DOCUMENTER DES CONDITIONS D'AVANCEMENT NON REMPLIES DANS DES SYSTEMES COMMANDES PAR DES PROGRAMMES PAS A PAS POUR COMMANDE PAR PROGRAMME ENREGISTRE

(30) Priorität: 18.04.1996 DE 19615389
(43) Veröffentlichungstag der Anmeldung: 03.02.1999
(73) Patentinhaber: Anton Steinecker Maschinenfabrik GmbH, 85356 Freising-Attaching (DE)
(72) Erfinder: KROISS, Peter, D-84178 Kröning (DE)
(74) Vertreter: Grünecker, Kinkeldey, Stockmair & Schwanhäusser Anwaltssozietät
(86) Internationale Anmeldenummer: EP9701755
(87) Internationale Veröffentlichungsnummer: WO9740431

(56) Entgegenhaltungen:
- EP-A- 0 435 139
- EP-A- 0 487 117
- US-A- 4 852 047
- US-A- 5 177 420
- US-A- 5 450 346

## Beschreibung

Die vorliegende Erfindung betrifft ein Verfahren zum Erfassen und Dokumentieren nicht erfüllter Fortschaltbedingungen bei Systemen, die von schrittorientierten SPS-Programmen gesteuert werden.

Speicherprogrammierbare Steuerungen (SPS) werden häufig ketten/schrittorientiert programmiert. Die Kettenstruktur wird im allgemeinen entsprechend maschinentechnischer Gegebenheiten (Zuordnung einer Kette zu einer maschinentechnischen Einheit), die Schrittstruktur nach funktionstechnischen Vorgaben (Verfahren, Abläufe) definiert.

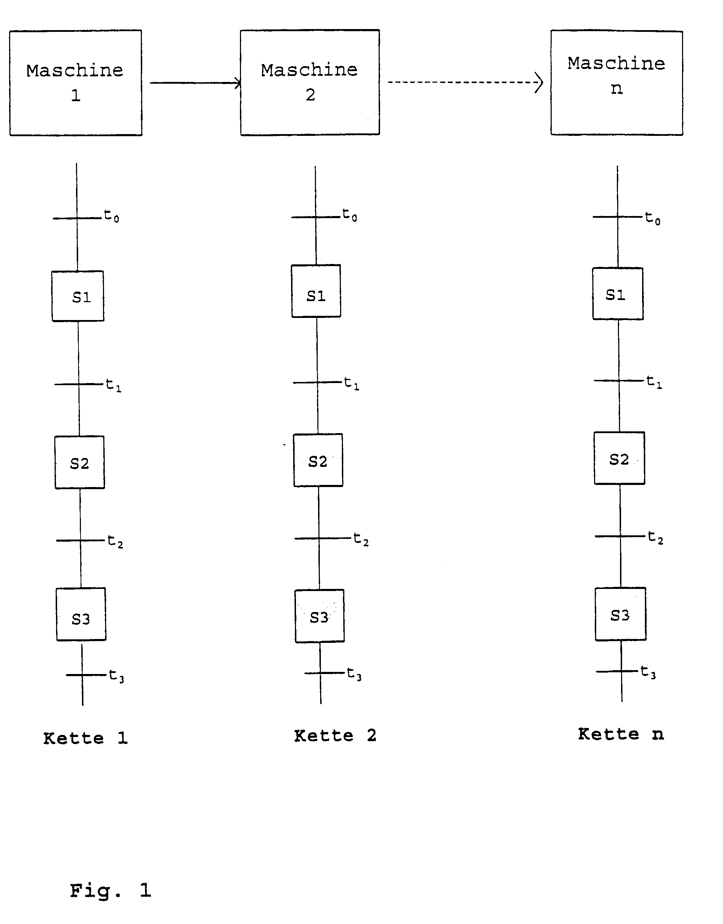

Figur 1 verdeutlicht die Zuordnung von Ketten 1 bis n zu entsprechenden Maschinen 1 bis n, wobei jede Kette mehrere Schritte S1 bis Sm aufweist.

Einzelne Schritte einer Kette werden üblicherweise durch ein entsprechend zugeordnetes Programm-Modul ausgeführt, wobei der Programmierer in der Regel keinen Einfluß auf die Speicheradressen hat, unter denen die einzelnen Programm-Module abgelegt sind. Die Modulverwaltung erfolgt im allgemeinen durch symbolische File-Bezeichnungen und mittels einem in der speicherprogrammierbaren Steuerung integrierten Adreßverwalter.

Bei bisher bekannten Systemen, die von schrittorientierten SPS-Programmen gesteuert werden, werden Informationen über die aktuelle Kette (Maschine) und den aktuellen Schritt (aktueller Ablauf) sowie zusätzlich programmierte Störüberwachungen, wie "Time-Out" der Bedienperson mittels eines Visualisierungs- bzw. Leitsystems zugänglich gemacht. Auf diese Weise ist die Bedienperson über die von der speicherprogrammierbaren Steuerung gerade ausgeführten Aktion sowie über das Vorhandensein bestimmter Ablaufprobleme informiert.

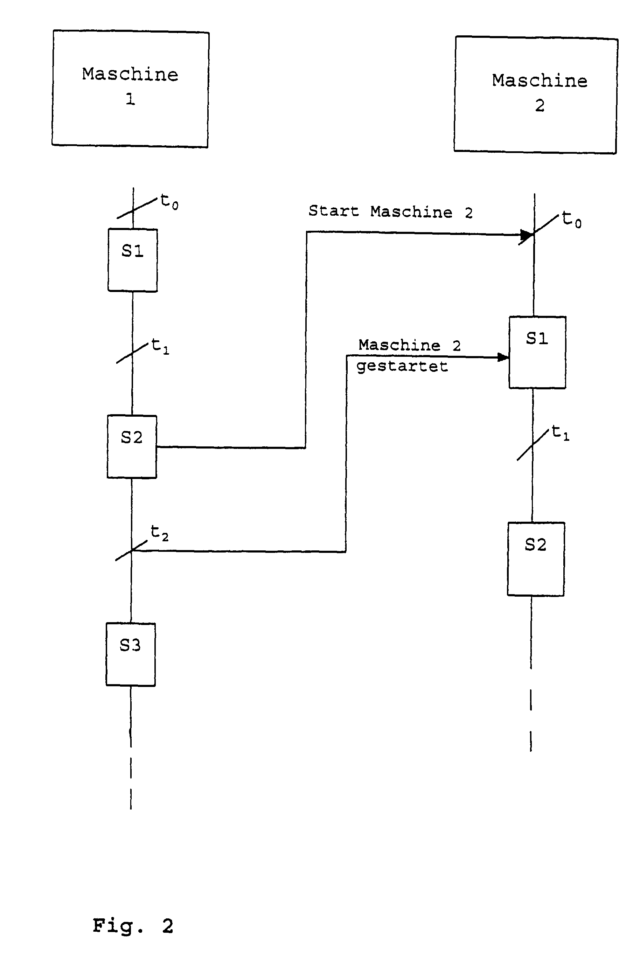

Allgemein wird bei ketten-/schrittorientiert programmierten speicherprogrammierbaren Steuerungen bei Erfüllung bestimmter Start- oder Weiterschaltbedingungen innerhalb einer Kette von einem Schritt zum nächsten weitergeschaltet oder es wird entsprechend zu einem Schritt einer anderen Kette verzweigt. Dies ist schematisch in Figur 2 dargestellt.

Entsprechende Start- und Weiterschaltbedingungen (Transitionen) bestehen im allgemeinen aus binären Verknüpfungen von Anlagenzuständen (Einlesen und Abfrage der Peripherie etc.), Verfahrenszuständen (Abfragen über Verweilzeiten, Temperaturen etc.) sowie maschinenübergreifenden Bedingungen (Synchronisation ineinandergreifender Maschinen).

Gemäß bisherigen Systemen konnten fehlende Bedingungen zum Start einer Maschine bzw. zur Fortschaltung einer Maschine zu einem nächsten Schritt oder Unterablauf nur von entsprechend ausgebildetem und ausgerüstetem Fachpersonal mittels Kopplung eines Programmiergeräts an die speicherprogrammierbare Steuerung ermittelt werden.

US 4 852 047 A beschreibt ein Programmier- und Überwachungssystem für programmgesteuerte Maschinen, bei dem die Nummer desjenigen Blockes eines aus mehreren Blöcken bestehenden Flußdiagrammes angezeigt wird, der zum Zeitpunkt einer Unterbrechung ausgeführt bzw. simuliert wurde.

Es ist die Aufgabe der vorliegenden Erfindung, eine Möglichkeit anzugeben, mit der in einfacher und komfortabler Weise nicht erfüllte Fortschaltbedingungen bei schrittorientierten SPS-Programmen erfaßt und dokumentiert werden können.

Diese Aufgabe wird durch den Gegenstand des Anspruches 1 gelöst.

Bevorzugte Ausgestaltungen der Erfindung sind Gegenstand der Unteransprüche.

Gemäß einer bevorzugten Ausführungsform der vorliegenden Erfindung wird der SPS-Programmablauf bezüglich des Auftretens nicht ausgeführter Start- oder Weiterschaltbefehle überwacht. Diese Überwachung kann beispielsweise mittels Zeitüberwachungsschleifen erfolgen, die eine Meldung abgeben, wenn sich die Ausführung eines bestimmten Start- oder Weiterschaltbefehls für mehr als eine vorgegebene Zeitdauer verzögert. Jedoch ist auch denkbar, daß das Bedienpersonal eine derart abnormale Situation durch eine manuelle Eingabe anzeigt.

Wird das Auftreten eines nicht ausgeführten Start- oder Weiterschaltbefehls erkannt, so wird durch ein spezielles Unterprogramm ermittelt, welches Programm-Modul momentan abgearbeitet wird, um somit die Analyse nach nicht erfüllten Bedingungen, die für die detektierte Nichtausführung eines Start- oder Weiterschaltbefehls verantwortlich sind, auf das aktuelle Modul einschränken zu können.

Die in einem Programm-Modul enthaltenen Fortschaltbedingungen sind üblicherweise als sogenannte Makrocodes programmiert, wobei üblicherweise, jedoch nicht zwingend, ein einzelner Makrocode nur eine einzige Fortschaltbedingung definiert. Eine derartige Fortschaltbedingung kann beispielsweise in der Abfrage "Ventil geschlossen?" oder "Temperatur erreicht?" bestehen.

Gemäß einer bevorzugten Ausführungsform des erfindungsgemäßen Verfahrens werden die relevanten Makrocodes des Programm-Moduls nacheinander in einen speziellen Speicherbereich eingelesen und von dort aus weiter ausgewertet. Dadurch ist gewährleistet, daß der eigentliche Programmablauf durch das die Analyse durchführende Unterprogramm nicht gestört wird.

Das Unterprogramm veranlaßt den simulierten Ablauf jedes in den speziellen Speicherbereich eingelesenen Makrocodes, um somit die Bedingung oder die Bedingungen zu ermitteln, die für die fehlende Fortschaltung des Programms verantwortlich sind. Jeder Makrocode enthält neben einer Definition hinsichtlich der durch ihn repräsentierten Start- oder Weiterschaltbedingung zusätzlich ein Adreßteil, der auf einen Speicherbereich verweist, in dem Informationen abgelegt sind, die zum Überprüfen der Erfüllung der entsprechenden Bedingung notwendig sind. Beispielsweise kann der Adreßteil auf eine einzelne Speicherzelle verweisen, in der ein Flag enthalten ist, das Aufschluß darüber gibt, ob ein bestimmtes Ventil geöffnet oder geschlossen ist.

Dadurch, daß ein entsprechender Makrocode in den speziellen Speicherbereich eingelesen wird, ist es für das entsprechende Unterprogramm allein durch die simulierte Ausführung des Makrocodes und des dadurch bewirkten Zugriffs auf die erwähnten "Flags" möglich zu detektieren, ob der gerade geprüfte Makrocode und die ihm zugrundeliegende Weiterschaltbedingung die Ursache für die festgestellte fehlende Ausführung des nächsten Start- oder Weiterschaltbefehls war.

Wird bereits in bezug auf den ersten eingelesenen Makrocode festgestellt, daß die ihm zugrundeliegende Bedingung unerfüllt geblieben ist, was somit zumindest teilweise die Ursache für die festgestellte fehlende Fortschaltung des Programmablaufs war, so kann gemäß einer bevorzugten Ausführungsform des Verfahrens das Einlesen der Makrocodes in den speziellen Speicherbereich bereits an dieser Stelle abgebrochen werden. Alternativ ist es möglich, dennoch auch die weiteren Makrocodes des aktuellen Programm-Moduls einzulesen und simuliert ablaufen zu lassen. In jedem Fall müssen die Makrocodes jedoch so lange sequentiell eingelesen werden, bis das erste Mal ein Makrocode festgestellt wurde, der die Ursache für die fehlende Fortschaltung darstellen kann. Auf diese Weise wird ein einzelner oder mehrere Makrocodes ermittelt, deren Start- oder Weiterschaltbedingungen nicht erfüllt sind und die daher ursächlich für die festgestellte fehlende Weiterschaltung des Programms waren.

Gemäß der vorliegenden Erfindung wird anschließend für den einzelnen Makrocode oder die mehreren Makrocodes ein Tabellennachschlageschritt ausgeführt, durch den für jeden Makrocode eine geeignete Anzeigeninformation ermittelt werden kann. Diese Anzeigeninformation kann beispielsweise in einem Kommentar, wie "Ventil", "Ventil geschlossen", "Ventil auf" etc. bestehen. Die verwendete Tabelle enthält also eine Zuordnung zwischen Makrocodes und geeigneten Anzeigeninformationen.

Derartige Listen bezüglich der Bedeutung jedes einzelnen Makrocodes werden in der Regel bereits bei der Programmierung einer speicherprogrammierbaren Steuerung angelegt, so daß das die Analyse durchführende Unterprogramm auf eine derartige bereits vorhandene Liste zurückgreifen kann.

Die so ermittelte Anzeigeninformation wird zusammen mit oder ohne den entsprechenden Makrocode auf einer Anzeigeneinrichtung angezeigt. Das Bedienpersonal erkennt daraus die Bedingung, deren Nichterfüllung die Ursache für die fehlende Fortschaltung oder den fehlenden Start eines weiteren Ablaufs war. Waren mehre Bedingungen nicht erfüllt, so können auf der Anzeigeneinrichtung auch eine Vielzahl von Meldungen erscheinen, aus denen das Bedienpersonal alle entsprechenden nichterfüllten Bedingungen ablesen kann. Diese Umsetzung der ermittelten Makrocodes in Anzeigeinformationen einschließlich der Tabellendurchsicht kann außerhalb der SPS beispielsweise auf einem PC erfolgen.

Gemäß der vorgestellten bevorzugten Ausführungsform der Erfindung wird die SPS durch die vorgenommene Erfassung und Dokumentation nicht erfüllter Fortschaltbedingungen in keiner Weise beeinflußt. Da die Makrocodes vor ihrer Bearbeitung auf einen speziellen Speicherbereich übertragen werden, ist das erfindungsgemäße Verfahren für die eigentliche SPS transparent.

Gemäß einer weiteren bevorzugten Variante der vorliegenden Erfindung kann das Verfahren auch zur Programmdokumentationserstellung verwendet werden. Da Programme in der Regel ständig umgestaltet und verbessert werden, muß auch die Programmdokumentation ständig angepaßt werden, was einen zeitraubenden Vorgang darstellt. Da mit dem erfindungsgemäßen Verfahren eine Möglichkeit geschaffen wurde, über die erwähnten Tabellen eine Zuordnung zwischen Makrocodes und Kommentar (oder allgemein "Anzeigeinformation") vorzunehmen, ist es durch Einführen entsprechender Hilfsflags, welche die Nichterfüllung jeglicher Fortschaltbedingungen simulieren, möglich, das gesamte Programm automatisch dokumentieren zu lassen. In diesem speziellen Fall wird jeder Makrocode in den besonderen Speicherbereich eingelesen, dort simuliert und der zugehörge Kommentartext zur Anzeige gebracht.

## Patentansprüche

1. Verfahren zum Erfassen und Dokumentieren nicht erfüllter Fortschaltbedingungen bei Systemen, die von schrittorientierten SPS-Programmen gesteuert werden mit folgenden Schritten:
Überwachung des SPS-Programmablaufs bezüglich des Auftretens eines nicht ausgeführten Start- oder Weiterschaltbefehls,
in Antwort auf das Erkennen des Auftretens eines nicht ausgeführten Start- oder Weiterschaltbefehls, Starten eines Unterprogramms zum Durchführen folgender Schritte:
a) Erkennen des momentan ablaufenden Programm-Moduls,
b) Einlesen eines ersten Makrocodes des momentanen Programm-Moduls in eine Speichereinrichtung, wobei der Makrocode zumindest eine Start- oder Weiterschaltbedingung definiert und einen Adreßteil enthält, der auf einen Speicherbereich verweist, in dem eine für die Bedingungsanalyse notwendige Information gespeichert ist,
c) simuliertes Ausführen des ersten Makrocodes basierend auf dem in die Speichereinrichtung eingelesenen Code,
d) Erkennen, ob die durch den ersten Makrocode definierte Start- oder Weiterschaltbedingung ursächlich für die erkannte Nichtausführung des Start- oder Weiterschaltbefehls ist,
e) zumindest für den Fall, daß die durch den ersten Makrocode definierte Start- oder Weiterschaltbedingung nicht ursächlich für die erkannte Nichtausführung eines Start- oder
Weiterschaltbefehls ist, Wiederholen der Schritte b bis d für einen weiteren Makrocode des momentanen Programm-Moduls,
**gekennzeichnet durch** die Schritte:
f) Einlesen zumindest eines Makrocodes, dessen Start- oder Weiterschaltbedingung ursächlich für die erkannte Nichtausführung eines Start- oder Weiterschaltbefehls war aus der Speichereinrichtung in ein Anzeigesystem,
g) Nachschlagen in einer Tabelle, um eine zu der Start- oder Weiterschaltbedingung des entsprechenden Makrocodes passende Anzeigeinformation zu ermitteln, und
h) Darstellen der Anzeigeinformation auf einer Anzeigeeinrichtung des Anzeigesystems.

2. Verfahren nach Anspruch 1, **dadurch gekennzeichnet**, daß alle Makrocodes des aktuellen Programm-Moduls ermittelt werden, deren Start- oder Weiterschaltbedingung ursächlich für die erkannte Nichtausführung eines Start- oder Weiterschaltbefehls sind und Anzeigen der entsprechenden Anzeigeinformation für jeden dieser Makrocodes.

3. Verfahren nach Anspruch 1 oder 2, **dadurch gekennzeichnet**, daß der Schritt des Überwachens des SPS-Programmablaufs bezüglich des Auftretens nicht ausgeführter Start- oder Weiterschaltbefehle einen Zeitmeßschritt beinhaltet, mittels dem eine abnormale Verzögerung bezüglich der Ausführung eines Start- oder Weiterschaltbefehls erkannt werden kann.

## Claims

1. Process for detecting and documenting unfulfilled step-enabling conditions in systems controlled by step-oriented SPC programs having the following steps:
monitoring of the SPC program flow with regard to the recurrence of a non-executed start or advance command,
in response to the identification of the occurrence of a non-executed start or advance command, starting of a subroutine for carrying out the following steps:
a) identification of the instantaneously running program module,
b) reading of a first macrocode of the instantaneous program module into a storage device, the macrocode defining at least one start or advance condition and containing an address section referring to a memory area in which an information item that is necessary for the condition analysis is stored,
c) simulated execution of the first macrocode based on the code read into the storage device,
d) identification of whether the start or advance condition defined by the first macrocode is the cause of the identified non-execution of the start or advance command,
e) at least in the case where the start or advance condition defined by the first macrocode is not the cause of the identified non-execution of a start or advance command,
repetition of steps b to d for a further macrocode of the instantaneous program module,
**characterized** by the following steps:
f) reading of at least one macrocode whose start or advance condition was the cause of the identified non-execution of a start or advance command from the storage device into a display system,
g) looking-up in a table in order to determine a display information item corresponding to the start or advance condition of the corresponding macrocode and,
h) presentation of the display information item on a display device of the display system.

2. Process according to Claim 1, **characterized** in that all the macrocodes of the current program module are determined whose start or advance condition is the cause of the identified non-execution of a start or advance command, and displays of the corresponding display information item for each of these macrocodes.

3. Process according to Claim 1 or 2, **characterized** in that the step of monitoring of the SPC program flow with regard to the occurrence of non-executed start or advance commands comprises a time measuring step, by means of which it is possible to identify an abnormal delay with regard to the execution of a start or advance command.

## Revendications

1. Procédé pour détecter et documenter des conditions d'avancement non remplies dans des systèmes commandés par des programmes pas à pas pour commande programmable, présentant les pas suivants :
Surveillance du déroulement du programme pour commande programmable en ce qui concerne l'apparition d'un ordre de démarrage ou d'avancement non exécuté,
en réponse à la détection de l'apparition d'un ordre de démarrage ou d'avancement non exécuté, lancement d'un sous-programme pour effectuer les pas suivants :
a) détection du module de programme actuellement en cours,
b) lecture d'un premier macro-code du module de programme en cours dans un dispositif de mémoire, le macro-code définissant au moins une condition de démarrage ou d'avancement et comprenant une partie adresse, qui renvoie à une zone de mémoire, dans laquelle est mémorisée une information nécessaire à l'analyse de la condition,
c) exécution simulée du premier macro-code sur la base du code lu dans le dispositif de mémoire,
d) détermination si la condition de démarrage ou d'avancement définie par le premier macro-code est la cause ou non de la non-exécution détectée de l'ordre de démarrage ou d'avancement,
e) au moins pour le cas où la condition de démarrage ou d'avancement définie par le premier macro-code n'est pas la cause de la non-exécution détectée d'un ordre de démarrage ou d'avancement, répétition aes pas b a d pour un autre macro-code du module de programme en cours,
**caractérisé par** les pas :
f) lecture d'au moins un macro-code, dont la condition de démarrage ou d'avancement était la cause de la non-exécution détectée d'un ordre de démarrage ou d'avancement, dans un dispositif de mémoire pour le transmettre à un système d'affichage,
g) consultation d'une table afin de déterminer une information d'affichage correspondant à la condition de démarrage ou d'avancement du macro-code concerné, et
h) présentation de l'information d'affichage sur un dispositif d'affichage du système d'affichage.

2. Procédé selon la revendication 1, **caractérisé en ce que** tous les macro-codes du module de programme en cours, dont la condition de démarrage ou d'avancement est la cause de la non-exécution détectée d'un ordre de démarrage ou d'avancement, sont déterminés, et par l'affichage de l'information d'affichage correspondante pour chacun de ces macro-codes.

3. Procédé selon la revendication 1 ou 2, **caractérisé en ce que** le pas de surveillance du déroulement du programme pour commande programmable en ce qui concerne l'apparition d'ordres de démarrage ou d'avancement non exécutés comporte un pas de mesure du temps, au moyen duquel il est possible de détecter un retard anormal d'exécution d'un ordre de démarrage ou d'avancement.
